Europäisches Patentamt

European Patent Office

Office européen des brevets

(11) Publication number: **0 139 793**
**B1**

(12) **EUROPEAN PATENT SPECIFICATION**

(45) Date of publication of patent specification: **07.01.88**

(51) Int. Cl.⁴: **C 04 B 35/58**

(21) Application number: **83306170.8**

(22) Date of filing: **12.10.83**

(54) **A silicon nitride sintered body and a method for producing it.**

(30) Priority: **02.09.83 JP 160551/83**

(43) Date of publication of application:
**08.05.85 Bulletin 85/19**

(45) Publication of the grant of the patent:
**07.01.88 Bulletin 88/01**

(84) Designated Contracting States:
**DE FR GB IT SE**

(56) References cited:
**EP-A-0 107 919**
**EP-A-0 117 936**
**US-A-4 234 343**

**AMERICAN CERAMIC SOCIETY BULLETIN, vol. 59, no. 12, December 1980, pages 1212-1215, Columbus, Ohio, USA; A. GIACHELLO et al.: "Sintering and properties of silicon nitride containing Y2O3 and MgO"**

**CHEMICAL ABSTRACTS, vol. 94, no. 16, April 1981, page 313, no. 126356e, Columbus, Ohio, USA**

(73) Proprietor: **NGK INSULATORS, LTD.**
**2-56, Suda-cho, Mizuho-ku**
**Nagoya-shi, Aichi 467 (JP)**

(72) Inventor: **Matsuhiro, Keiji**
**303 Takemi-Cho Mansion 37-1 Takemi-Cho, 4-Chome**
**Mizuho-ku Nagoya City (JP)**
Inventor: **Matsui, Minoru**
**193 Aza-Imonoshihora Ohaza-Kamiyashiro Idaka-Cho Meito-Ku Nagoya City (JP)**

(74) Representative: **Paget, Hugh Charles Edward et al**
**MEWBURN ELLIS & CO. 2/3 Cursitor Street London EC4A 1BQ (GB)**

(56) References cited:
**CHEMICAL ABSTRACTS, vol. 97, no. 10, September 1982, page 319, no. 77369n, Columbus, Ohio, US; G.S. KANDELAKI et al.: "Study of the mutual effect of yttrium and zirconium oxides on the sintering of silicon nitride"**

**Description**

The present invention relates to silicon nitride sintered bodies and to a method for producing such bodies.

Silicon nitride sintered bodies have better mechanical strength, heat resistance, thermal shock resistance and corrosion resistance than metal materials and therefore it is proposed to use such bodies for various machine parts which are operated at high temperature at which metal minerals cannot be used. The development of this application has progressed extensively.

Of the properties required of materials to be used for machine parts for operation at high temperature, high oxidation resistance is needed for durability and dimensional stability of the parts for a long period of time, in addition to the necessary mechanical properties at high temperatures.

In general, when silicon nitride sintered bodies and silicon carbide sintered bodies (which have also been proposed for use at high temperature as ceramic materials) are compared, silicon nitride sintered bodies have been found better than silicon carbide sintered bodies in respect of mechanical properties, for example, flexural strength, fracture toughness, thermal shock resistance and the like. On the other hand, silicon carbide sintered bodies are superior in respect of the oxidation resistance. Therefore, for silicon nitride sintered bodies, improvement of oxidation resistance has been sought together with improvement of mechanical properties.

As sintering processes for obtaining highly densified silicon nitride sintered bodies, pressureless sintering and hot press sintering and the like are known. Pressureless sintering can produce various products easily and cheaply in mass production but needs a large amount of sintering aid to achieve sufficient densification and is not satisfactory in respect of the high temperature strength and oxidation resistance achieved. Hot press sintering and the like can provide sintered bodies of high density with use of a small amount of sintering aid but in order to obtain large articles or articles of complicated form in mass production, this process has the great drawback that the production cost is very large.

US—A—4 234 343 describes a silicon nitride-based structural material containing $SiO_2$ and $M_2O_3$ where M is selected from Yb, Dy, Er, Sc and alloys having Yb, Dy, Er or Y as a first component and Sc, Al, Cr, Ti (Mg + Zr) or (Ni + Zr) as a second component. Particularly emphasised is the formation of a stable crystalline $M_2Si_2O_7$ phase which provides increase of strength. The only case illustrated where M is an alloy is that in which M is (Sc + Y). Hot pressing is used.

An object of the present invention is to provide a silicon nitride sintered body having high density and strength and excellent oxidation resistance, in which drawbacks of the prior art are at least partly avoided or mitigated, and a method which permits production of such silicon nitride sintered bodies easily and cheaply using pressureless sintering.

The present invention consists in a silicon nitride sintered body as set out in claim 1. The invention further consists in a method for producing such a body as set out in claim 4. Preferably firing is under ambient pressure.

A further explanation of the invention, and non-limitative examples thereof, are given below with reference to the accompanying drawings, in which:—

Fig. 1 is a flow diagram of one method for producing silicon nitride sintered bodies of the present invention; and

Fig. 2 is a graph showing a comparison of the strength at room temperature, strength at 1,200°C and weight gain due to oxidation of a silicon nitride sintered body (Sample No. 31) of the present invention and of a comparative sintered body (Sample No. 13).

In silicon nitride sintered bodies of the present invention, a second phase produced by the specifically defined amounts of Y, Mg, Zr, Si, O and N is formed between the grain boundary of $Si_3N_4$ crystals during the firing. The superior properties of promotion of densification, control of micro-structure and oxidation resistance which are possessed only by the second phase of the specifically defined composition make it possible to provide silicon nitride sintered bodies having particularly excellent density, strength and oxidation resistance.

A more detailed explanation now follows. In the invention, the sintered body contains Y, Mg and Zr and the content of Y is 15—2% by weight calculated as $Y_2O_3$, the content of Mg is 15—0.5% by weight calculated as MgO, and the content of Zr is 13—0.5% by weight, preferably 3.3—0.5% by weight, calculated as $ZrO_2$. The content ratio of Y to Mg is preferably in the range 9 to 1, more preferably in the range 4 to 1.2, calculated as the weight ratio of $Y_2O_3/MgO$. The relative theoretical density is preferably more than 95%, the four-point flexural strength is preferably more than 60 kg/mm² (590 MPa) and the weight gain due to oxidation when exposed in air at 1,200°C for 100 hours is preferably less than 0.5 mg/cm². Such properties are obtainable with the present invention.

Without wishing to be bound by this explanation, we suppose that the reason why silicon nitride sintered bodies of the present invention have high density, high strength and excellent oxidation resistance is based on the following facts.

It is already known that compounds of Y, Mg and Zr show activity in promoting the densification of $Si_3N_4$, when such components are used alone, or in the combination of two components thereof or in combination with a third, different component as a sintering aid for $Si_3N_4$. However, in the sintered bodies

2

of the present invention containing the specifically defined amounts of Y, Mg and Zr, the following four factors, namely

(1) the progress of densification due to the particle rearrangement mechanism based on Mg—Si—O—N base liquid formation in the initial low temperature state in the firing process,

(2) the improvement of the mutual bonding strength of $Si_3N_4$ crystals due to the diffusion controlled phase transformation mechanism of α-type $Si_3N_4$ crystal to β-type $Si_3N_4$ crystal based on Y—Si—O—N base liquid formation in the moderate and high temperature state from the middle to the final stage of sintering process,

(3) the improvement of the fracture toughness owing to $ZrO_2$ crystal dispersed in the grain boundary of $Si_3N_4$ crystals, and

(4) the improvement of oxidation resistance due to Y—Mg—Zr—Si—O—N base grain boundary phase formation, are extremely well developed in the course of sintering and provide sintered bodies having far better properties than those developed by use of a single compound of yttrium, magnesium or zirconium or of a combination of two such compounds. This appears to be a synergistic effect.

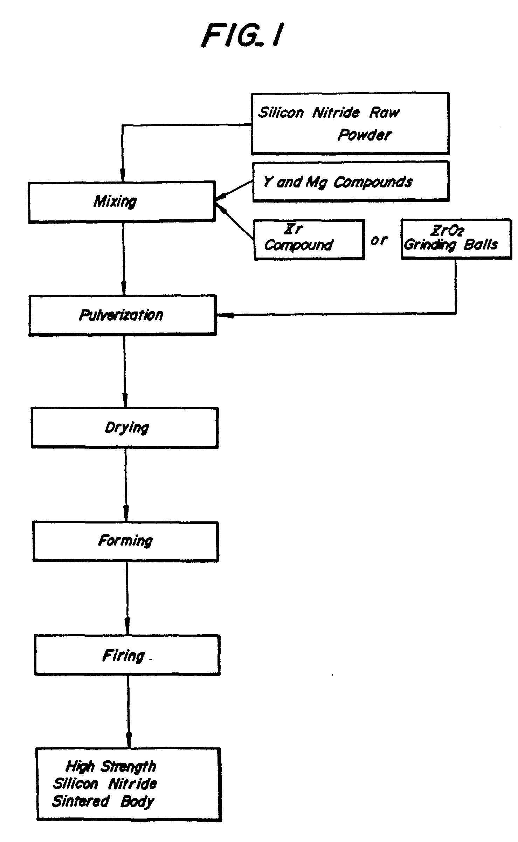

Silicon nitride sintered bodies of the present invention can be produced by the following preferred method, shown in Fig. 1.

A mixture containing silicon nitride raw powder, yttrium compound, magnesium compound and zirconium compound in the amounts specified above is prepared. The pulverization and mixing of the raw powders are effected, for example, by a rotation mill, a vibration mill, attrition mill or the like. Wet pulverizing or dry pulverizing may be used and the pulverizing conditions, such as powder treatment, grinding ball amount, liquid medium amount and the like are suitably selected depending upon the pulverizing process. The liquid medium is acetone, alcohol, water or the like. The pulverizing time varies depending upon the pulverizing process and the treated amount but is selected so that the average grain size and BET specific surface area of the pulverized powder achieve certain saturated values. When the raw materials are prepared, yttrium compound and magnesium compound may be compounded in powder or solution form, but zirconium compound may be added as $ZrO_2$ in a form other than powder or solution to the raw materials through abrasion of grinding balls made of zirconia ceramics during the pulverizing step using grinding balls made of zirconia ceramics. When $ZrO_2$ is added through abrasion of grinding balls made of zirconia ceramics, the amount of $ZrO_2$ incorporated during the pulverizing step is previously decided and the pulverizing conditions should be carefully checked so that said amount is within the range of 13—0.5% by weight.

The grinding balls made of zirconia ceramics which are used in this way should contain $ZrO_2$ in more than 70% by weight, the remainder being mainly $Y_2O_3$ and/or MgO and their relative density being more than 90%.

The thoroughly pulverized and mixed raw material may have added to it an organic binder, such as polyvinyl alcohol or the like, if necessary, and the resulting mixture is then stirred and the powder or slurry is dried to obtain a shaping powder. The shaping powder is formed into desired shapes through hydrostatic press molding or the like and then fired at ambient pressure in a nitrogen atmosphere or an inert gas atmosphere at a temperature of 1,650—1,800°C, preferably 1,670—1,750°C for 0.5—2 hours to obtain the silicon nitride sintered body. The raw material silicon nitride powder preferably has an α-phase content of more than 50% by weight and the total amount of Fe, Al, Ca, Na and K as impurities is preferably less than 1% by weight, the BET specific surface area preferably is 20—2 m²/g and the average grain size is preferably less than 1 μm. The compounds of yttrium, magnesium or zirconium, may be any which may be formed into oxides or oxy-nitrides through firing, for example, $Y_2O_3$, $Y(NO_3)_3$, MgO, $Mg(OH)_2$, $MgCO_3$, $Mg(NO_3)_2.6H_2O$, $ZrO_2$, $ZrO(OH)_2$, etc. and preferably have a purity of more than 99% by weight.

When these compounds are added as powder, an average grain size of less than 5 μm and a BET specific surface area of 1—50 m²/g are preferable. However, these compounds may be impregnated in the silicon nitride raw material powder as an aqueous solution of nitrate or an alkoxide solution and then converted into oxides.

The reasons for selecting and restricting the quantities of the components of the material of the present invention will now be explained.

The content of $Si_3N_4$ in silicon nitride sintered bodies of the present invention is defined to be 95—70% by weight, because when the content exceeds 95% by weight, an amount of the sintering aid is deficient and the sinterability requirement is not satisfied, while when the content is less than 70% by weight, the mechanical strength and heat resistance possessed by $Si_3N_4$ deteriorate.

The compounds of yttrium, magnesium and zirconium are defined to be 15—2% by weight calculated as $Y_2O_3$, 15—0.5% by weight calculated as MgO and 13—0.5% by weight calculated as $ZrO_2$ respectively, because if any one of these components is in excess or insufficient the activity developed by these components as the sintering aid in the sintering process is reduced and the density, mechanical strength and oxidation resistance of the sintered bodies is lowered. With respect to zirconium, particularly desirable results can be obtained with a content of 3.9—0.5% by weight calculated as $ZrO_2$.

For these reasons also, the starting materials of the method are chosen within the ranges specified above.

Any silicon nitride sintered bodies within the widest limitation of the components in the present invention are thought to have high oxidation resistance but when the contents of yttrium and magnesium are within the range of 9—1 calculated as the weight ratio of $Y_2O_3/MgO$, the oxidation resistance is particularly high, because the oxidation resistance of the grain boundary phase composed of Y—Mg—Zr—Si—O—N is particularly improved within this particular range of the weight ratio of $Y_2O_3/MgO$. The specification of the relative theoretical density as more than 95%, the four point flexural strength at 1,200°C as more than 60 $kg/mm^2$ (590 MPa) and the weight increase due to oxidation when exposed in air at 1,200°C as less than 0.5 $mg/cm^2$ defines the preferred properties that enable sintered bodies of the present invention to be stably used at high temperatures.

The reason why it is preferable to add zirconium compound to the raw material as $ZrO_2$ by abrasion of grinding balls made of zirconia ceramics in the course of pulverizing is as follows. The addition of $ZrO_2$ in this way can provide better results than the addition of $ZrO_2$ as a raw material powder. Thus, uniform dispersion can be obtained in a shorter time and also a greater pulverizing effect can be concurrently developed because zirconia ceramics have a high density, so that the production time can be shortened and the homogenization of the sintered bodies can be easily attained.

The following examples are given for the purpose of illustration of this invention and are not intended as limitations thereof.

Example 1

Silicon nitride raw powder having a purity of 97.1% by weight, an average particle size of 0.7 μm and a BET specific surface area of 20 $m^2/g$ was mixed with $Y_2O_3$, MgO and $ZrO_2$ raw material powders used as a sintering aid, each having a purity of 99—98% by weight, an average particle size of 1.4—0.6 μm and a BET specific surface area of 30—10 $m^2/g$ in each of the compounding recipes shown in the following Table 1 to prepare a mixed powder. In each case 200 g of the mixed powder was charged into a vessel made of nylon resin and having a capacity of 1.2 l together with 500 g of grinding balls made of iron having a diameter of 7 mm and coated with nylon resin on the surface, and 500 ml of acetone, and then pulverized for 10 hours by means of a vibratory mill vibrated at a rate of 1,200 cycles per minute. Then, the acetone was evaporated and the resulting pulverized raw material mixture was granulated into particles having an average grain size of 100 μm. The granulated particles were formed into a shaped body having a dimension of 60 × 60 × 6 mm by a hydrostatic press under a pressure of 3 $tons/cm^2$. The shaped body was sintered at a firing temperature shown in Table 1 for 0.5 hour under ambient pressure in a nitrogen atmosphere to produce silicon nitride sintered bodies according to the present invention (Sample Nos. 1—12). Separately, comparative silicon nitride sintered bodies (Sample Nos. 13—24) having a composition outside the scope of the present invention were produced under the same condition as described above. These sintered bodies were measured with respect to the contents of $Si_3N_4$, $Y_2O_3$, MgO and $ZrO_2$; weight ratio of $Y_2O_3/MgO$; relative density; strengths at room temperature and 1,200°C; and weight gain due to oxidation in the exposure to air at 1,200°C for 100 hours. The obtained results are shown in Table 1.

The strength given is a four point flexural strength measured according to JIS R—1601, "Testing Method for Flexural Strength (Modulus of Rupture) of High Performance Ceramics", and the weight gain due to oxidation is a value obtained by dividing the weight of a sample increased when the sample is soaked at the high temperature, by the surface area of the sample.

It can be seen from Table 1 that the sintered bodies of this example having a composition containing $Si_3N_4$, $Y_2O_3$, MgO and $ZrO_2$ in an amount within the range defined in the present invention have a relative density of at least 95%, a strength at room temperature of at least 110 $kg/mm^2$ (1080 MPa), a strength at 1,200°C of at least 60 $kg/mm^2$ (590 MPa), and a weight increase due to oxidation of not more than 0.5 $mg/cm^2$ in the exposure to air at 1,200°C for 100 hours. It is apparent that these sintered bodies of the present invention has properties remarkably superior to those of comparative sintered bodies.

TABLE 1(a)

| | Sample No. | Compounding recipe (wt. %) | | | | Weight ratio of $Y_2O_3$/MgO | Firing temperature (°C) |
|---|---|---|---|---|---|---|---|
| | | $Si_3N_4$ | $Y_2O_3$ (converted value) | MgO (converted value) | $ZrO_2$ (converted value) | | |
| Sintered body of this invention | 1 | 95.0 | 4.0 | 0.5 | 0.5 | 8.0 | 1,800 |
| | 2 | 90.0 | 2.0 | 1.0 | 7.0 | 2.0 | 1,750 |
| | 3 | 85.0 | 2.0 | 5.0 | 8.0 | 0.4 | 1,700 |
| | 4 | 74.0 | 12.0 | 1.0 | 13.0 | 12.0 | 1,700 |
| | 5 | 70.0 | 15.0 | 2.0 | 13.0 | 7.5 | 1,650 |
| | 6 | 90.0 | 4.0 | 2.0 | 4.0 | 2.0 | 1,750 |
| | 7 | 87.0 | 6.0 | 4.0 | 3.0 | 1.5 | 1,700 |
| | 8 | 85.0 | 9.0 | 1.0 | 5.0 | 9.0 | 1,700 |
| | 9 | 85.0 | 6.0 | 4.0 | 5.0 | 1.5 | 1,700 |
| | 10 | 84.0 | 7.0 | 7.0 | 2.0 | 1.0 | 1,700 |
| | 11 | 89.0 | 5.0 | 4.0 | 2.0 | 1.25 | 1,750 |
| | 12 | 70.0 | 2.0 | 15.0 | 13.0 | 0.13 | 1,700 |
| Comparative sintered body | 13 | 77.0 | 16.0 | 4.0 | 3.0 | 4.0 | 1,700 |
| | 14 | 75.0 | 6.0 | 16.0 | 3.0 | 0.38 | 1,650 |
| | 15 | 76.0 | 6.0 | 4.0 | 14.0 | 1.5 | 1,700 |
| | 16 | 92.0 | 1.0 | 4.0 | 3.0 | 0.25 | 1,850 |
| | 17 | 90.7 | 6.0 | 0.3 | 3.0 | 20.0 | 1,800 |
| | 18 | 89.7 | 6.0 | 4.0 | 0.3 | 1.5 | 1,750 |
| | 19 | 68.0 | 15.0 | 5.0 | 12.0 | 3.0 | 1,600 |
| | 20 | 97.0 | 1.0 | 0.5 | 0.5 | 2.0 | 1,850 |
| | 21 | 90.0 | 6.0 | 4.0 | — | 1.5 | 1,700 |
| | 22 | 90.0 | — | 5.0 | 5.0 | — | 1,750 |
| | 23 | 91.0 | 6.0 | — | 3.0 | — | 1,700 |
| | 24 | 92.0 | 8.0 | — | — | — | 1,750 |

TABLE 1(b)

| | Sample No. | Composition of sintered body (wt. %) | | | | Weight ratio of $Y_2O_3/MgO$ |
|---|---|---|---|---|---|---|
| | | $Si_3N_4$ | $Y_2O_3$ (converted value) | MgO (converted value) | $ZrO_2$ (converted value) | |
| Sintered body of this invention | 1 | 94.8 | 4.1 | 0.5 | 0.5 | 8.2 |
| | 2 | 89.7 | 2.0 | 1.0 | 6.8 | 2.0 |
| | 3 | 84.6 | 2.1 | 4.8 | 7.9 | 0.44 |
| | 4 | 74.1 | 12.2 | 0.9 | 12.7 | 13.56 |
| | 5 | 70.1 | 14.9 | 2.1 | 12.9 | 7.10 |
| | 6 | 90.2 | 3.7 | 1.8 | 4.1 | 2.06 |
| | 7 | 86.8 | 5.9 | 4.0 | 3.1 | 1.48 |
| | 8 | 85.3 | 9.2 | 0.9 | 4.9 | 10.22 |
| | 9 | 84.8 | 6.1 | 3.9 | 5.0 | 1.56 |
| | 10 | 84.0 | 6.9 | 7.1 | 2.1 | 0.97 |
| | 11 | 89.2 | 5.0 | 3.9 | 2.1 | 1.28 |
| | 12 | 70.0 | 2.0 | 14.8 | 13.0 | 0.14 |
| Comparative sintered body | 13 | 77.3 | 16.2 | 3.7 | 3.1 | 4.38 |
| | 14 | 75.2 | 6.1 | 15.9 | 3.0 | 0.38 |
| | 15 | 76.0 | 6.0 | 3.9 | 13.8 | 1.54 |
| | 16 | 92.0 | 1.0 | 4.1 | 2.9 | 0.24 |
| | 17 | 90.5 | 6.1 | 0.3 | 3.0 | 20.33 |
| | 18 | 89.4 | 5.8 | 4.1 | 0.3 | 1.41 |
| | 19 | 67.7 | 15.1 | 4.9 | 12.2 | 3.08 |
| | 20 | 96.9 | 1.0 | 0.4 | 0.5 | 2.50 |
| | 21 | 90.2 | 6.1 | 4.0 | — | 1.53 |
| | 22 | 89.7 | — | 4.8 | 5.1 | — |
| | 23 | 90.9 | 5.7 | — | 3.2 | — |
| | 24 | 91.6 | 7.8 | — | — | — |

TABLE 1(c)

| | | Relative density (%) | Strength (kg/mm²) (1 kp/mm² = 9.81 MPa) | | Weight gain due to oxidation (mg/cm²), 1,200°C × 100 hr |
|---|---|---|---|---|---|
| | | | room temperature | 1,200°C | |
| Sintered body of this invention | 1 | 95.6 | 112 | 60 | 0.41 |
| | 2 | 95.5 | 113 | 61 | 0.44 |
| | 3 | 96.3 | 115 | 62 | 0.49 |
| | 4 | 96.6 | 111 | 60 | 0.47 |
| | 5 | 95.0 | 114 | 64 | 0.42 |
| | 6 | 97.2 | 126 | 65 | 0.44 |
| | 7 | 96.6 | 141 | 73 | 0.08 |
| | 8 | 96.5 | 125 | 69 | 0.21 |
| | 9 | 97.6 | 131 | 66 | 0.22 |
| | 10 | 97.8 | 126 | 70 | 0.21 |
| | 11 | 98.1 | 144 | 74 | 0.09 |
| | 12 | 95.1 | 113 | 64 | 0.43 |
| Comparative sintered body | 13 | 94.3 | 95 | 43 | 1.4 |
| | 14 | 94.1 | 90 | 44 | 1.2 |
| | 15 | 93.4 | 98 | 34 | 1.7 |
| | 16 | 92.6 | 85 | 43 | 1.3 |
| | 17 | 93.6 | 99 | 32 | 1.1 |
| | 18 | 94.0 | 89 | 30 | 1.0 |
| | 19 | 93.1 | 85 | 34 | 1.9 |
| | 20 | 93.2 | 71 | 34 | 1.6 |
| | 21 | 93.1 | 77 | 35 | 1.8 |
| | 22 | 92.4 | 81 | 39 | 1.5 |
| | 23 | 93.7 | 77 | 37 | 1.1 |
| | 24 | 94.8 | 76 | 45 | 1.2 |

7

### Example 2

The same silicon nitride raw powder and raw material powders of sintering aids as used in Example 1 were mixed, and sintered bodies having various weight ratios of $Y_2O_3/MgO$ were produced. The comparison of the properties of the resulting sintered bodies is shown in the following Table 2. It is apparent from Table 2 that sintered bodies (Sample Nos. 25, 26 and 27) having a weight ratio of $Y_2O_3/MgO$ of 9.0—1.0 are superior in the relative density strength and weight increase due to oxidation to those (Sample Nos. 28 and 29) having a weight ratio of $Y_2O_3/MgO$ of higher than 9.0 or lower than 1.0.

TABLE 2(a)

| | Sample No. | Compounding recipe (wt.%) | | | | Weight ratio of $Y_2O_3/MgO$ | Firing temperature (°C) |
|---|---|---|---|---|---|---|---|
| | | $Si_3N_4$ | $Y_2O_3$ (converted value) | MgO (converted value) | $ZrO_2$ (converted value) | | |
| Sintered body of this invention | 25 | 74.0 | 10.5 | 10.5 | 5.0 | 1.0 | 1,700 |
| | 26 | 74.0 | 17.5 | 3.5 | 5.0 | 5.0 | 1,700 |
| | 27 | 74.0 | 18.9 | 2.1 | 5.0 | 9.0 | 1,700 |
| | 28 | 74.0 | 7.0 | 0.5 | 5.0 | 0.5 | 1,700 |
| | 29 | 74.0 | 19.1 | 1.9 | 5.0 | 10.1 | 1,700 |

TABLE 2(b)

| | Sample No. | Composition of sintered body (wt.%) | | | | Weight ratio of $Y_2O_3/MgO$ |
|---|---|---|---|---|---|---|
| | | $Si_3N_4$ | $Y_2O_3$ (converted value) | MgO (converted value) | $ZrO_2$ (converted value) | |
| Sintered body of this invention | 25 | 73.8 | 10.4 | 10.3 | 4.9 | 1.01 |
| | 25 | 73.9 | 17.6 | 3.4 | 5.0 | 5.18 |
| | 27 | 73.9 | 18.9 | 2.1 | 4.8 | 9.00 |
| | 28 | 73.8 | 7.0 | 0.5 | 5.0 | 14.0 |
| | 29 | 74.0 | 19.1 | 2.0 | 5.1 | 9.55 |

TABLE 2(c)

| | Sample No. | Relative density (%) | Strength (kg/mm²) | | Weight gain due to oxidation (mg/cm²), 1,200°C × 100 hr |
|---|---|---|---|---|---|
| | | | room temperature | 1,200°C | |
| Sintered body of this invention | 25 | 97.7 | 124 | 67 | 0.21 |
| | 26 | 97.5 | 122 | 66 | 0.12 |
| | 27 | 97.6 | 120 | 67 | 0.20 |
| | 28 | 96.9 | 114 | 61 | 0.45 |
| | 29 | 96.6 | 111 | 62 | 0.44 |

### Example 3

The same silicon nitride raw powder and powders of sintering aids as used in Example 1 were used to produce sintered bodies. However, in this Example 3, either $ZrO_2$ raw material powder was added to a mixture of the silicon nitride and the other sintering aids, or $ZrO_2$ powder formed by the abrasion of the zirconia ceramic grinding balls was added to the mixture, whereby the influence of the method of addition of $ZrO_2$ powder upon the properties of the resulting sintered body was examined. The zirconia ceramic grinding ball used is a spherical ball having a diameter of 7 mm, in which $ZrO_2$ content is 97% by weight and MgO content is 3% by weight, and the specific gravity is 5.7. The pulverization condition, forming condition and firing condition were same as those in Example 1. In the production of sintered body containing $ZrO_2$ formed by the abrasion of zirconia ceramic grinding balls, the pulverization time is varied as described in Table 3 so as to obtain sintered bodies containing a given amount of $ZrO_2$.

As seen from Table 3, sintered bodies (Sample Nos. 30—33) containing $ZrO_2$ formed by the abrasion of zirconia ceramic grinding balls have substantially the same excellent properties, as those of a sintered body (Sample No. 34) obtained by adding $ZrO_2$ as a raw material to the mixture of the silicon nitride and the other sintering aids. Moreover, comparison of Sample No. 33 with Sample No. 34, both of which are sintered bodies having the same $ZrO_2$ content, shows that the pulverization time in Sample No. 33 is as short as $\frac{1}{4}$ of the pulverization time in Sample No. 34, and further Sample No. 33 is exactly same in the properties as Sample No. 34. Therefore, the addition of $ZrO_2$ powder formed by the abrasion of zirconia ceramic grinding balls to a mixture of silicon nitride and the other sintering aids is very advantageous in the shortening of milling time.

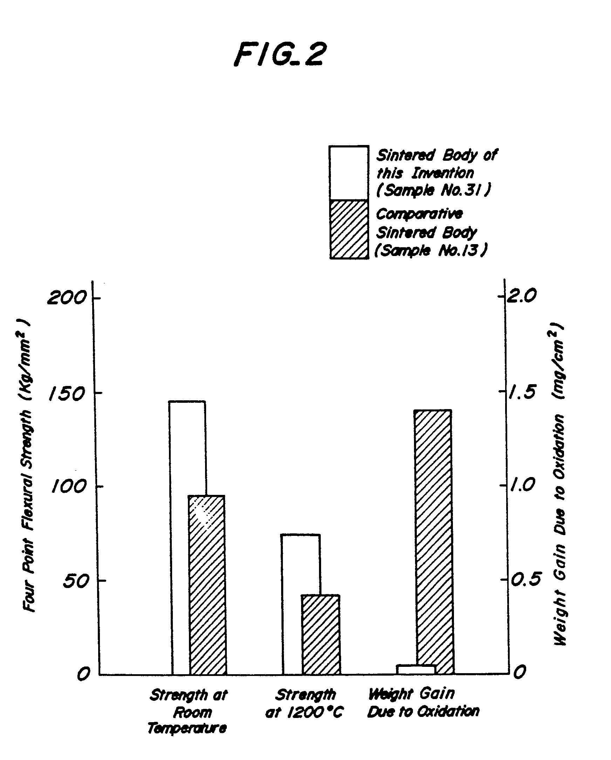

In order to illustrate clearly the effect of the present invention, comparison of a sintered body of Sample No. 31 with that of Sample No. 13 with respect to the strength at room temperature, the strength at 1,200°C and the weight increase due to oxidation is shown in Fig. 2.

TABLE 3(a)

| | Sample No. | Compounding recipe (wt.%) | | | | Weight ratio of $Y_2O_3$/MgO | Firing temperature (°C) | Composition of sintered body (wt.%) | | | |
|---|---|---|---|---|---|---|---|---|---|---|---|
| | | $Si_3N_4$ | $Y_2O_3$ (con- verted value) | MgO (con- verted value) | $ZrO_2$ (con- verted value) | | | $Si_3N_4$ | $Y_2O_3$ (con- verted value) | MgO (con- verted value) | $ZrO_2$ (con- verted value) |
| | 30 | 89.1 | 5.3 | 4.3 | 1.3 | 1.22 | 1,750 | 89.3 | 5.4 | 4.2 | 1.3 |
| Sintered body of this invention | 31 | 87.9 | 5.9 | 4.1 | 2.1 | 1.43 | 1,750 | 87.6 | 5.6 | 4.0 | 2.0 |
| | 32 | 86.8 | 6.5 | 2.8 | 3.9 | 2.33 | 1,750 | 86.8 | 6.6 | 2.8 | 3.8 |
| | 33 | 83.4 | 8.9 | 6.0 | 1.7 | 1.48 | 1,750 | 83.5 | 9.0 | 6.1 | 1.6 |
| | 34 | 83.4 | 8.9 | 6.0 | 1.7 | 1.48 | 1,750 | 83.6 | 8.9 | 5.9 | 1.7 |

TABLE 3(b)

| | Sample No. | Weight ratio of $Y_2O_3/MgO$ | Relative density (%) | Strength (kg/mm$^2$) | | Weight gain due to oxidation (mg/cm$^2$) | Grinding ball | Pulveri-zation zation time (hr) | BET specific surface area after pulveriza-tion (m$^2$/g) |
| | | | | room tempera-ture | 1,200°C | 1,200°C × 100 hr | | | |
|---|---|---|---|---|---|---|---|---|---|
| Sintered body of this invention | 30 | 1.29 | 98.1 | 145 | 74 | 0.08 | zirconia ceramics | 2 | 34 |
| | 31 | 1.40 | 98.0 | 146 | 75 | 0.05 | zirconia ceramics | 3 | 32 |
| | 32 | 2.36 | 98.3 | 144 | 78 | 0.07 | zirconia ceramics | 6 | 36 |
| | 33 | 1.48 | 98.6 | 147 | 79 | 0.07 | zirconia ceramics | 2.5 | 33 |
| | 34 | 1.51 | 98.4 | 144 | 73 | 0.08 | nylon | 10 | 29 |

Note: Compounding recipe of sample Nos. 30—33, which contained $ZrO_2$ formed by the abrasion of zirconia ceramic grinding balls during the pulverization step carried out by using the zirconia ceramic grinding balls, was measured by a chemical analysis of the contents of $Y_2O_3$, MgO and $ZrO_2$ in the pulverized raw material mixture.

As described above, according to the method of the present invention, silicon nitride sintered bodies having particularly excellent density, mechanical strength and oxidation resistance can be commercially and inexpensively obtained even by a sintering process under ambient pressure due to the synergistic effect of given amounts of Si₃N₄, Y₂O₃, MgO and ZrO₂. Moreover, the resulting silicon nitride sintered body can be used as engine parts, gas turbine parts, materials for high temperature furnace, bearings for high temperature, and the like, and is very useful for industry.

**Claims**

1. A silicon nitride sintered body consisting mainly of $Si_3N_4$ and containing at least one of Y, Mg and Zr characterised in that

the content of $Si_3N_4$ is in the range 95—70% by weight, and that the body contains all of Y, Mg and Zr in the form of oxides and/or oxynitrides, the content of Y being in the range 15—2% by weight calculated as $Y_2O_3$, the content of Mg is in the range 15—0.5% by weight calculated as MgO and the content of Zr is in the range 13—0.5% by weight calculated as $ZrO_2$, there being substantially no other component present and the body having a relative density of not less than 95%.

2. A silicon nitride sintered body as claimed in claim 1, wherein the ratio of Y and Mg is in the range from 9 to 1 calculated as the weight ratio of $Y_2O_3$/MgO.

3. A silicon nitride sintered body as claimed in claim 1 or claim 2 which has a four-point flexural strength at 1,200°C in air of more than 60 kg/mm² (590 MPa) and a weight increase due to oxidation after exposure in air at 1,200°C for 100 hours of less than 0.5 mg/cm².

4. A method of producing a silicon nitride sintered body, which comprises forming a raw powder containing $Si_3N_4$ and a sintering aid containing at least one of Y, Mg and Zr into a shaped body and firing the body, characterized by forming into a shaped body a mixed raw powder consisting of 95—70% by weight of silicon nitride raw powder, 15—2% of yttrium compound by weight calculated as $Y_2O_3$, 15—0.5% of magnesium compound by weight calculated as MgO and 13—0.5% of zirconium compound by weight calculated as $ZrO_2$, said yttrium compound, magnesium compound and zirconium compound serving as sintering aids, and firing the shaped body at a temperature of 1,650—1,800°C in a nitrogen or inert gas atmosphere to produce a sintered body having a relative density of not less than 95%.

5. A method as claimed in claim 4, wherein the weight ratio of yttrium compound to magnesium compound is in the range from 9 to 1 calculated as $Y_2O_3$/MgO.

6. A method as claimed in claim 4 or claim 5, wherein zirconium compound is added into the raw material through abrasion of grinding balls made of zirconia ceramics used in a pulverizing process in preparing the mixed raw material powder.

**Patentansprüche**

1. Gesinterter Siliziumnitridkörper, der hauptsächlich aus $Si_3N_4$ besteht und mindestens eines von Y, Mg und Zr enthält, dadurch gekennzeichnet, daß

der Gehalt an $Si_3N_4$ im Bereich von 95 bis 70 Gew.-% liegt und der Körper Y, Mg und Zr vollkommen in Form von Oxiden und/oder Oxynitriden enthält, der Gehalt an Y im Bereich von 15 bis 2 Gew.-%, berechnet als $Y_2O_3$, liegt, der Gehalt an Mg im Bereich von 15 bis 0,5 Gew.-%, berechnet als MgO, liegt und der Gehalt an Zr im Bereich von 13 bis 0,5 Gew.-%, berechnet als $ZrO_2$, lèigt, im wesentlichen keine andere Komponente vorhanden ist und der Körper eine relative Dichte von nicht weniger als 95% aufweist.

2. Gesinterter Siliziumnitridkörper nach Anspruch 1, worin das Verhältnis von Y und Mg im Bereich von 9 zu 1 liegt, berechnet als Gewichtsverhältnis von $Y_2O_3$/MgO.

3. Gesinterter Siliziumnitridkörper nach Anspruch 1 oder 2 mit einer Vierpunkt-Biegefestigkeit bei 1200°C in Luft von mehr als 60 kg/mm² (590 MPa) und einer Gewichtszunahme von weniger als 0,5 mg/cm² aufgrund von Oxidation, nachdem man ihn 100 Stunden bei 1200°C Luft ausgesetzt hat.

4. Verfahren zum Herstellen eines gesinterten Siliziumnitridkörpers durch Bilden eines Rohpulvers, das $Si_3N_4$ und ein Sinterhilfsmittel enthält, wobei das Sinterhilfsmittel mindestens eines von Y, Mg und Zr enthält, zu einem Formkörper und Glühen des Körpers, dadurch gekennzeichnet, daß ein gemischtes Rohpulver zu einem Formkörper verarbeitet wird, das aus 95 bis 70 Gew.-% Siliziumnitrid-Rohpulver, 15 bis 2 Gew.-% Yttriumverbindung, berechnet als $Y_2O_3$, 15 bis 0,5 Gew.-% Magnesiumverbindung, berechnet als MgO und 13 bis 0,5 Gew.-% Zirconiumverbindung, berechnet als $ZrO_2$, besteht, wobei die Yttriumverbindung, Magnesiumverbindung und Zirconiumverbindung als Sinterhilfsmittel dienen und der Formkörper bei einer Temperatur von 1650 bis 1800°C in Stickstoff oder Inertgas-Atmosphäre geglüht wird, um einen Sinterkörper mit einer relativen Dichte von nicht weniger als 95% herzustellen.

5. Verfahren nach Anspruch 4, worin das Gewichtsverhältnis von Yttriumverbindung zu Magnesiumverbindung im Bereich von 9 zu 1, berechnet als $Y_2O_3$/MgO, liegt.

6. Verfahren nach Anspruch 4 oder 5, worin Zirconiumverbindung dem Rohmaterial durch Abrieb von Mahlkugeln aus Zirconiumdioxid-Keramik, die beim Pulverisieren zur Herstellung des gemischten Rohmaterialpulvers benutzt werden, hinzugefügt wird.

# 0 139 793

**Revendications**

1. Corps fritté en nitrure de silicium consistant principalement en $Si_3N_4$ et contenant au moins l'un parmi Y, Mg et Zr
caractérisé en ce que
la teneur en $Si_3N_4$ est comprise entre 95 et 70% en poids et en ce que le corps contient la totalité de Y, Mg et Zr sous la forme d'oxydes et/ou oxynitrures, la teneur en Y étant comprise entre 15 et 2% en poids en calculant sous la forme de $Y_2O_3$, la teneur en Mg étant comprise entre 15 et 0,5% en poids en calculant sous la forme de MgO et la teneur en Zr étant comprise entre 13 et 0,5% en poids en calculant sous la forme de $ZrO_2$, sensiblement aucun autre composant n'étant présent et le corps ayant une densité relative de pas moins de 95%.

2. Corps fritté en nitrure de silicium selon la revendication 1 où le rapport de Y et Mg est compris entre 9 et 1 en calculant sous la forme du rapport pondéral de $Y_2O_3$/MgO.

3. Corps fritté en nitrure de silicium selon la revendication 1 ou la revendication 2 qui a une résistance à la flexion en quatre points à 1.200°C à l'air de plus de 60 kg/mm² (590 MPa) et une augmentation de poids due à l'oxydation après exposition à l'air à 1.200°C pendant 30 heures de moins de 0,5 mg/cm².

4. Procédé de fabrication d'un corps fritté en nitrure de silicium, qui consiste à former une poudre brute contenant $Si_3N_4$ et un auxiliaire de frittage contenant au moins l'un de Y, Mg et Zr en un corps en forme et à cuire le corps, caractérisé en ce qu'on met, en corps en forme, une poudre brute mélangée consistant en 95—70% en poids de poudre brute de nitrure de silicium, 15—2% d'un composé d'yttrium en poids en calculant sous la forme de $Y_2O_3$, 15—0,5% d'un composé de magnésium en poids en calculant sous la forme de MgO et 13—0,5% d'un composé de zirconium en poids en calculant sous la forme de $ZrO_2$, ledit composé d'yttrium, ledit composé de magnésium et ledit composé de zirconium servant d'auxiliaires de frittage et on cuit le corps en forme à une température de 1.650—1.800°C dans une atmosphère d'azote ou d'un gaz inerte pour produire un corps fritté ayant une densité relative de pas moins de 95%.

5. Méthode selon la revendication 4, où le rapport pondéral du composé d'yttrium au composé de magnésium est compris entre 9 et 1 en calculant sous la forme de $Y_2O_3$/MgO.

6. Méthode selon la revendication 4 ou la revendication 5, où le composé de zirconium est ajouté dans la matière brute par abrasion de billes de broyage faites de céramiques de zircone utilisées dans un procédé de pulvérisation pour la préparation de la poudre de matière brute mélangée.

13

# FIG. 1

```
                                    ┌─────────────────────────┐
                                    │  Silicon Nitride Raw    │
                                    │        Powder           │
                                    └─────────────────────────┘

                                    ┌─────────────────────────┐
                                    │  Y and Mg Compounds     │
          ┌──────────────┐          └─────────────────────────┘
          │   Mixing     │
          └──────────────┘     ┌──────────┐        ┌──────────────┐
                               │   Zr     │  or    │    ZrO₂      │
                               │ Compound │        │Grinding Balls│
                               └──────────┘        └──────────────┘

          ┌──────────────┐
          │ Pulverization│
          └──────────────┘


          ┌──────────────┐
          │   Drying     │
          └──────────────┘


          ┌──────────────┐
          │   Forming    │
          └──────────────┘


          ┌──────────────┐
          │   Firing     │
          └──────────────┘


          ┌──────────────┐
          │ High Strength│
          │Silicon Nitride│
          │ Sintered Body│
          └──────────────┘
```

# FIG.2

Legend:
- □ Sintered Body of this Invention (Sample No.31)
- ▨ Comparative Sintered Body (Sample No.13)

Left axis: Four Point Flexural Strength (Kg/mm²) — 0, 50, 100, 150, 200

Right axis: Weight Gain Due to Oxidation (mg/cm²) — 0, 0.5, 1.0, 1.5, 2.0

Categories: Strength at Room Temperature, Strength at 1200°C, Weight Gain Due to Oxidation